Europäisches Patentamt

European Patent Office

Office européen des brevets

(11) Veröffentlichungsnummer: **0 329 811 B1**

(12) **EUROPÄISCHE PATENTSCHRIFT**

(45) Veröffentlichungstag der Patentschrift: **06.05.92**

(51) Int. Cl.5: **F16F 15/26**

(21) Anmeldenummer: **88102830.2**

(22) Anmeldetag: **25.02.88**

(54) **Antriebssystem für eine eine Hin- und Herbewegung ausführende Arbeitseinheit.**

(43) Veröffentlichungstag der Anmeldung:
**30.08.89 Patentblatt 89/35**

(45) Bekanntmachung des Hinweises auf die Patenterteilung:
**06.05.92 Patentblatt 92/19**

(84) Benannte Vertragsstaaten:
**DE**

(56) Entgegenhaltungen:
**EP-A- 0 058 785**
**WO-A-84/01606**
**DE-A- 2 149 220**
**FR-A- 1 360 229**

(73) Patentinhaber: **Klimkiewicz, Wladyslaw,
Doz.Dr.Ing.Mech
ul. Chrzanowskiego 62 D/5
PL-80-278 Gdansk(PL)**

(72) Erfinder: **Wasielewski, Roman
ul. Jednosci Narodu 29A/4
83-110 Tczew(PL)**
Erfinder: **Klimkiewicz, Wladyslaw
ul. Chrzanowskiego 62 D/5
Gdansk-Wrzeszcz(PL)**

(74) Vertreter: **Finck, Dieter et al
Patentanwälte v. Füner, Ebbinghaus, Finck
Mariahilfplatz 2 & 3
W-8000 München 90(DE)**

## Beschreibung

Die Erfindung betrifft ein Antriebssystem für eine Hin- und Herbewegung ausführenden Arbeitseinheit mit wenigstens einer Schwungmasse zur Speicherung von kinetischer Energie, sowie mit Kurbeln, Zapfen und Gegengewichten.

In Maschinen, in welchen die durch eine bestimmte Eigenmasse gekennzeichnete Arbeitseinheit eine Hin- und Herbewegung ausführt, entstehen Trägheitskräfte, deren Größe den Hauptfaktor der Beeinflussung des dynamischen und des energetischen Zustands sowohl des Antriebes als auch der ganzen Maschine darstellt. Die zeitveränderlichen Trägheitskräfte rufen in diesen Maschinen eine Reihe von betriebstechnischen Schwierigkeiten und Nachteilen hervor, zu welchen vor allem die variable Belastung des Antriebsmotors, die variablen Verbrauchsreaktionen und der erhöhte Energiebedarf zum in Bewegunghalten der Arbeitseinheit zählen.

Es sind bereits zahlreiche Lösungen für Antriebssysteme von Arbeitseinheiten bekannt (US-A-4407169), die in den Maschinen eine Hin- und Herbewegung ausführen. Zur Minimierung der beschriebenen nachteiligen Erscheinungen werden bei derartigen Systemen meistens ein oder mehrere mit der Antriebswelle der Maschine verbundene Schwungräder oder Gegengewichte zum Ausgleich der Trägheitskräfte vorgesehen. Dabei werden auch Speichereinrichtungen für potentielle Energie verwendet, die direkt an die Antriebseinheit mit hin- und hergehender Bewegung angeschlossen werden und meistens eine Kurbel mit Kurbelzapfen und Gegengewichte aufweisen.

Die beschriebenen technischen Mittel zur Beseitigung der in den Maschinen mit einer Arbeitseinheit mit Hin- und Herbewegung auftretenden dynamischen Überlastungen beseitigen die genannten Erscheinungen nicht völlig oder nur teilweise für eine gewählte Drehzahl des Antriebsmotors oder der Antriebswelle der Maschine, wodurch deren Einsatzbereich beschränkt wird.

Die der Erfindung zugrunde liegende Aufgabe besteht nun darin, ein Antriebssystem für eine eine Hin- und Herbewegung ausführende Arbeitseinheit zu schaffen, bei welchem die Nachteile der bekannten Systeme beseitigt sind, die sich aus der Veränderlichkeit der Trägheitskräfte ergeben.

Diese Aufgabe wird erfindungsgemäß dadurch gelöst, daß an die mit einem Zapfen versehene Arbeitseinheit um eine sich quer zur Bewegungsrichtung des Arbeitseinheit erstreckende Achse drehbar jede Schwungmasse zur Speicherung von kinetischer Energie, vorzugsweise in Scheibenform, angeschlossen ist. Die Gesamtmasse der Schwungmassen ist gleich der Masse der Arbeitseinheit. Der Schwerpunkte jeder Speichermasse befindet sich in einer Entfernung, die der Hälfte der Hublänge der Arbeitseinheit entspricht, und zwar ausgehend von der Achse des jede Speichermasse mit der Arbeitseinheit verbindenden Zapfens. Auf der Mitte der Entfernung zwischen dem Schwerpunkt jeder Schwungmasse und der Zapfenachse ist an jede Schwungmasse drehbar eine Kurbel angeschlossen, deren Radius 0,25 der Hublänge der Arbeitseinheit gleich ist. Die Drehachse der Kurbel liegt in einer zu der Bewegungsrichtung der Arbeitseinheit senkrechten Ebene und fällt mit der Achse der Zapfen in der Mittellage der Arbeitseinheit zusammen. In der Verlängerung der Kurbel liegt auf der ihrer Drehachse gegenüberliegenden Seite ein vorzugsweise in Form eines Ringabschnittes ausgeführtes Gegengewicht, dessen Schwerpunkt in der zu der Kurbelachse senkrechten, vorzugsweise den Schwerpunkt jeder Schwungmasse schneidenden Ebene liegt. Die Summe der Produkte der Massen der Gegengewichte und der Entfernungen ihrer Schwerpunkte von ihren Drehachsen ist gleich dem Produkt aus der Masse der Arbeitseinheit und der Hälfte ihrer Hublänge.

Durch den Einsatz der Schwungmasse zur Speicherung von kinetischer Energie in der beschriebenen speziellen Bauart bewirkt das erfindungsgemäße System, daß die bei der Ausführung der Hin- und Herbewegung durch die Arbeitseinheit entstehende kinetische Energie, die veränderlich ist, nur innerhalb des geschlossenen Netzes der Elemente der Einheit, d.h. zwischen der Arbeitseinheit und jeder Schwungmasse zur Speicherung von kinetischer Energie übertragen wird. Dadurch gibt es keine in weitem Bereich veränderlichen Belastungen des Antriebsmotors der Einheit, wodurch der Energiebedarf,um die Einrichtung in Bewegung zu halten, verringert wird. Das mit der Kurbel der Einrichtung verbundene Gegengewicht kompensiert die auf jede Schwungmasse und auf die Arbeitseinheit wirkenden Trägheitskräfte, wodurch die Reaktion an den Lagerungen der Einrichtung entfällt, so daß eine viel leichtere Konstruktion der ganzen Einrichtung und ihres Fundaments vorgesehen werden kann. Durch den Einsatz von mindestens zwei symmetrisch gegenüber dem Schwerpunkt der Arbeitseinheit angeordneten Schwungmassen zur Speicherung von kinetischer Energie in dem erfindungsgemäßen System wird die Führung dieser Einheit wesentlich von den Antriebskräften entlastet, wodurch die Bewegungswiderstände vermindert werden können.

Durch den Einsatz des erfindungsgemäßen Antriebssystems zum Antrieb einer eine Hin- und Herbewegung ausführenden Arbeitseinheit ergeben sich keine nachteiligen Folgen durch die Einwirkung der Trägheitskräfte auf dem ganzen Drehzahlbereich des Antriebes der Maschine. Dies ermöglicht eine beträchtliche Erhöhung der Arbeitsleistung der Maschine sowie eine verbesserte Anpassung der Maschine an veränderliche Betriebsverhältnisse.

Wenn das erfindungsgemäße Antriebssystem mit einer Schwungmasse zur Speicherung von kinetischer Energie, beispielsweise in einer Bügelsägemaschine zum Antrieb der Bügelsäge, verwendet wird, kann die Drehzahl des Antriebes erhöht werden, wodurch die Bearbeitungskapazität gesteigert und die Masse des Fundamentes der Maschine vermindern werden kann.

Das Antriebssystem eignet sich besonders für Arbeitsmaschinen, wie Sägen in der Holzindustrie, niedertourige Arbeitsmaschinen für Erdarbeiten, Rammgeräte, Bergbaumaschinen und ähnliche, sowie mechanische Trägheits- und Gegenlaufpressen.

Anhand von Zeichnungen wird ein Ausführungsbeispiel der Erfindung näher erläutert. Es zeigt:

Fig. 1    das Getriebeschema des Antriebsystems in einer Vorderansicht und

Fig. 2    das Antriebsystem von Fig. 1, geschnitten in einer in der Achse der Arbeitseinheit liegenden und durch die Mitten der Zapfen dieser Einheit sowie durch die Symmetrieachse des Gegengewichtes gehenden Ebene.

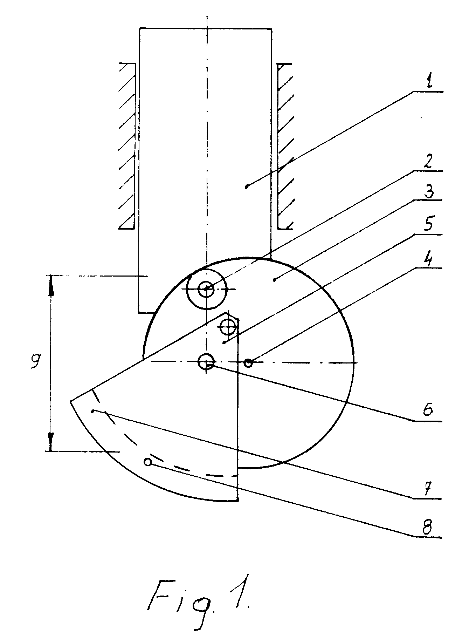

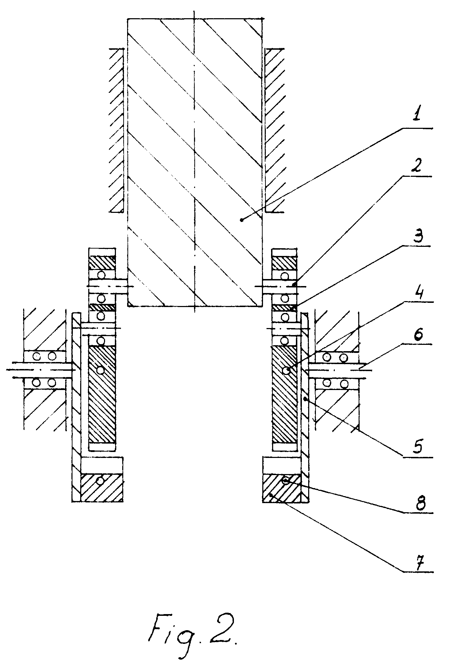

Das in Fig. 1 und 2 gezeigte Antriebssystem besteht aus einer mit zwei Zapfen 2 versehenen Arbeitseinheit 1. An den Zapfen 2 sitzen drehbar, insbesondere in einer Wälzlagerung, zwei spiegelbildlich Schwungmassen 3 zur Speicherung von kinetischer Energie, die in Form von massiven Scheiben ausgeführt sind. Die Gesamtmasse der beiden Schwungmassen 3 ist gleich der Masse der Arbeitseinheit 1.

Die Schwerpunkte 4 der beiden Schwungmassen 3 befinden sich in einer Entfernung von einer halben Hublänge 9 der Arbeitseinheit 1 von der Achse des Zapfens 2 aus, der die jeweilige Schwungmasse 3 mit der Arbeitseinheit 1 verbindet. Auf der Mitte der Entfernung zwischen dem Schwerpunkt 4 jeder Schwungmasse 3 und der Achse des Zapfens 2 jeder Schwungmasse 3 ist drehbar, beispielsweise in einer Wälzlagerung, eine Kurbel 5 angeschlossen, deren Radius gleich 0,25 der Hublänge 9 der Arbeitseinheit 1 ist. Die Drehachse 6 der Kurbel 5 liegt in einer zu dem Bewegungsrichtung der Arbeitseinheit 1 senkrechten Ebene und fällt mit der Achse der Zapfen 2 in der Mittellage der Arbeitseinheit 1 zusammen. In der Verlängerung der Kurbel 5 ist auf der ihrer Drehachse 6 gegenüberliegenden Seite ein dauerhaft damit verbundenes Gegengewicht 7, vorzugsweise in Form eines Ringausschnittes, vorgesehen. Der Schwerpunkt 8 des Gegengewichtes 7 liegt in einer zu der Drehachse 6 der Kurbel 5 senkrechten, durch den Schwerpunkt 4 jeder Schwungmasse 3 gehenden Ebene. Wesentlich in dem Aufbau des Systems ist, daß die Summe der Produkte der Massen der Gegengewichte 7 und der Entfernungen ihrer Schwerpunkte 8 von der Drehachse 6 gleich dem Produkt aus der Masse der Arbeitseinheit und der halben Hublänge 9 dieser Arbeitseinheit 1 ist.

Das Funktionsprinzip des Systems besteht darin, daß, während der Richtungssinn des Vektors der Trägheitskraft der Arbeitseinheit 1 mit der Verlagerungsrichtung dieser Einheit übereinstimmt, d.h. wenn die Arbeitseinheit ihre kinetische Energie abgibt, diese Energie in den Schwungmassen 3 gespeichert wird, und daß dann, wenn der Richtungssinn des Vektors der Trägheitskraft der Arbeitseinheit 1 zu der Verlagerungsrichtung dieser Einheit entgegengesetzt ist, d.h. wenn der Arbeitseinheit 1 Energie zugeführt werden soll, die Arbeitseinheit 1 die Energie direkt von den Schwungmassen 3 aufnimmt.

In dem System können die Schwungmassen 3 parallel geschaltet, d.h. derart, daß der Motor die Arbeitseinheit 1 unter Umgehung der Schwungmassen 3 antreibt, oder in Reihe geschaltet werden, d.h. derart, daß der Antriebsmotor der Einrichtung an der Drehachse 6 der Kurbel 5 angeschlossen ist.

**Patentansprüche**

1.    Antriebssystem für eine eine Hin- und Herbewegung ausführende Arbeitseinheit (1) mit wenigstens einer Schwungmasse zur Speicherung kinetischer Energie, sowie mit Kurbeln (5), Zapfen (2) und Gegengewichten (7), dadurch **gekennzeichnet,** daß an die mit einem Zapfen (2) versehene Arbeitseinheit (1) um eine sich quer zur Bewegungsrichtung der Arbeitseinheit (1) erstreckende Achse drehbar jede Schwungmasse (3) zur Speicherung von kinetischer Energie angeschlossen ist, deren Gesamtmasse der Masse der Arbeitseinheit (1) gleich ist und deren Schwerpunkt (4) in einer Entfernung von einer halben Hublänge (9) der Arbeitseinheit (1), ausgehend von der Achse des jede Schwungmasse (3) mit der Arbeitseinheit (1) verbindenden Zapfens (2) liegt, wobei auf der Mitte des Abstandes zwischen dem Schwerpunkt (4) jeder Schwungmasse (3) und der Achse des Zapfens (2) drehbar an jede Schwungmasse (3) eine Kurbel (5) angeschlossen ist, deren Radius ein Viertel der Hublänge (9) der Arbeitseinheit (1) beträgt, deren Drehachse (6) in der zu der Bewegungsrichtung der Arbeitseinheit (1) senkrechten Ebene liegt und mit der Achse der Zapfen (2) in der Mittellage der Arbeitseinheit (1) zusammenfällt, wobei auf der Verlängerung der Kurbel (5) auf der ihrer Drehachse (6) gegenüberliegenden Seite ein Gegengewicht (7) angeordnet ist, dessen Schwerpunkt (8) in einer zu der Drehachse (6) der Kurbel (5) senkrechten Ebene liegt, und daß die Summe der Produkte der Massen der Gegengewichte (7) und der Entfernungen ihrer Schwerpunkte (8) von ihrer Drehachse (6) gleich dem Produkt aus der Masse der Arbeitseinheit (1) und der Hälfte ihrer Hublänge (9) gleich ist.

2. Antriebssystem nach Anspruch 1, dadurch **gekennzeichnet,** daß jede Schwungmasse (3) zur Speicherung von kinetischer Energie scheibenförmig ausgebildet ist.

3. Antriebssystem nach Anspruch 1 oder 2, dadurch **gekennzeichnet,** daß das Gegengewicht (7) die Form eines Ringausschnitts hat.

4. Antriebssystem nach wenigstens einem der Ansprüche 1 bis 3, dadurch **gekennzeichnet,** daß der Schwerpunkt (8) des Gegengewichts (7) in einer zu der Drehachse (6) der Kurbel (5) senkrechten, durch den Schwerpunkt (4) jeder Schwungmasse (3) gehenden Ebene liegt.

**Claims**

1. Driving system for a reciprocating working unit (1) having at least one flywheel mass for storing kinetic energy as well as cranks (5), journals (2) and counterweights (7), characterised in that each flywheel mass (3) for storing kinetic energy is connected to the working unit (1) provided with a journal (2) so as to rotate about an axis extending transversely to the direction of movement of the working unit (1), the total weight of the flywheel mass being equal to the mass of the working unit (1) and the centre of gravity (4) thereof lying at a distance of a half stroke length (9) of the working unit (1), starting from the axis of the journal (2) connecting each flywheel mass (3) to the working unit (1), a crank (5) being rotatably connected to each flywheel mass (3) midway between the centre of gravity (4) of each flywheel mass (3) and the axis of the journal (2), the radius of the crank being one quarter of the stroke length (9) of the working unit (1) of which the rotational axis (6) lies in the plane perpendicular to the direction of movement of the working unit (1) and coincides with the axis of the journals (2) in the centre position of the working unit (1), a counterweight (7) being disposed on the extension of the crank (5) on the side opposite the rotational axis (6) thereof, the centre of gravity (8) of the said counterweight (7) lying in a plane which is perpendicular to the rotational axis (6) of the crank (5); and in that the sum of the products of the masses of the counterweights (7) and the distances between their centres of gravity (8) and their axis of rotation (6) equals the product of the mass of the working unit (1) and half its stroke length (9).

2. Drive system according to Claim 1, characterised in that each flywheel mass (3) is disc-shaped in order to store kinetic energy.

3. Drive system according to Claim 1 or 2, characterised in that the counterweight (7) is in the shape of an annular section.

4. Drive system according to at least one of Claims 1 to 3, characterised in that the centre of gravity (8) of the counterweights (7) lies in a plane which is perpendicular to the axis of rotation (6) of the cranks (5) and which passes through the centre of gravity (4) of each flywheel mass (3).

**Revendications**

1. Système moteur Pour une unité de travail (1) exécutant un mouvement de va-et-vient, le système comprenant au moins une masse d'inertie pour emmagasiner de l'énergie cinétique ainsi qu'une manivelle (5), un pivot (2) et des contrepoids (7), caractérisé par le fait que chaque masse d'inertie (3) pour emmagasiner de l'énergie cinétique est montée sur l'unité de travail (1), munie d'un pivot (2), de façon à pouvoir tourner autour d'un axe qui s'étend perpendiculairement à la direction de mouvement de l'unité de travail (1), la totalité des masses d'inertie (3) étant égale à la masse de l'unité de travail (1), leur centre de gravité (4) étant situé à une distance moitié d'une course de travail (9) de l'unité de travail (1), mesurée à partir de l'axe du pivot (2) reliant chaque masse d'inertie (3) à l'unité de travail (1), une manivelle (5) étant montée, de façon rotative, au milieu de la distance entre le centre de gravité (4) de chaque masse d'inertie (3) et l'axe du pivot (2) le rayon de la manivelle étant le quart de la course de travail (9) de l'unité de travail (1), le pivot (6) de la manivelle étant orienté dans un plan perpendiculaire à la direction de mouvement de l'unité de travail (1) et étant confondu avec l'axe du pivot (2) lorsque l'unité de travail (1) se trouve au milieu de sa course, un contrepoids (7) étant monté sur la prolongation de la manivelle (5) et du côté opposé à son pivot (6), le centre de gravité (8) du contrepoids (7) étant situé dans un plan perpendiculaire au pivot (6) de la manivelle (5), et en ce que la somme des produits des masses des contrepoids (7) et des distances entre leurs centres de gravité (8) et leur pivot (6) est égale au produit de la masse de l'unité de travail (1) et la moitié de sa course de travail (9).

2. Système moteur selon la revendication 1, caractérisé par le fait que chaque masse d'inertie (3) pour emmagasiner de l'énergie cinétique a la forme d'un disque.

3. Système moteur selon la revendication 1 ou 2, caractérisé par le fait que le contrepoids (7) a la forme d'un secteur circulaire.

4. Système moteur selon l'une des revendications 1 à 3, caractérisé par le fait que le centre de gravité (8) du contrepoids (7) est situé dans un plan perpendiculaire à l'axe (6) de la manivelle (5) et traversant le centre de gravité (4) de chaque masse d'inertie (3).

Fig. 1.

Fig. 2.